(19) Europäisches Patentamt / European Patent Office / Office européen des brevets

(11) **EP 3 287 481 B1**

(12) **EUROPEAN PATENT SPECIFICATION**

(45) Date of publication and mention of the grant of the patent:
**19.08.2020 Bulletin 2020/34**

(21) Application number: **16783332.6**

(22) Date of filing: **23.03.2016**

(51) Int Cl.:
$C08G\ 63/181^{(2006.01)}$      $C08J\ 3/02^{(2006.01)}$
$C09D\ 167/02^{(2006.01)}$

(86) International application number:
**PCT/KR2016/002889**

(87) International publication number:
**WO 2016/171398 (27.10.2016 Gazette 2016/43)**

(54) **WATER-DISPERSIBLE POLYESTER RESIN HAVING IMPROVED WATER RESISTANCE AND CHEMICAL RESISTANCE, WATER-DISPERSION EMULSION CONTAINING SAME, AND PREPARATION METHOD THEREOF**

WASSERDISPERGIERBARES POLYESTERHARZ MIT VERBESSERTER WASSERBESTÄNDIGKEIT UND CHEMIKALIENBESTÄNDIGKEIT, WASSERDISPERSIONSEMULSION DAMIT UND HERSTELLUNGSVERFAHREN DAFÜR

RÉSINE POLYESTER HYDRODISPERSABLE PRÉSENTANT UNE MEILLEURE RÉSISTANCE À L'EAU ET UNE MEILLEURE RÉSISTANCE AUX PRODUITS CHIMIQUES, ET ÉMULSION HYDRODISPERSABLE LA CONTENANT, ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2015 KR 20150057180**

(43) Date of publication of application:
**28.02.2018 Bulletin 2018/09**

(73) Proprietor: **SK Chemicals Co., Ltd.**
**Gyeonggi-do 13494 (KR)**

(72) Inventors:
• **YIM, You-jin**
**Gyeonggi-do 13494 (KR)**

• **KIM, Soon-Ki**
**Suwon-si**
**Gyeonggi-do 16354 (KR)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**EP-A1- 1 123 947      EP-A2- 2 184 308**
**JP-A- H08 199 115      JP-A- 2002 538 274**
**KR-B1- 101 489 429      US-A- 4 340 519**
**US-A- 5 380 590      US-A- 6 080 807**
**US-A1- 2004 072 003**

EP 3 287 481 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present invention relates to a water-dispersible polyester resin having improved water resistance and chemical resistance, a water-dispersed emulsion comprising the same, and a preparation method thereof.

## Background Art

Typically, resins are used with various organic solvents in order to serve as paints, inks, coating materials, adhesives, or the like. Recently, the use of organic solvents has been gradually restricted for the purpose of preventing environmental pollution and securing workplace safety.

Since most of the resins used in these applications are hydrophobic, it is crucial to disperse the resins in water or to hydrate them. It is also essential that coating layers formed from water-dispersed resins have water resistance and weather resistance similar to those of coating layers formed form resins with organic solvents, as well as excellent chemical resistance.

Widely used methods for preparing an aqueous dispersion of a water-dispersible polyester resin are to introduce a carboxyl group to the polyester structure or to use a metal salt of sulfonic acid. For example, Japanese Patent Laid-open Publication No. 2007-177026 discloses a method for preparing an aqueous dispersion by using, relative to the amount of carboxyl groups of a polyester resin, 0.1 to 1.5 equivalents of amines as a neutralizing agent for neutralization, while mixing an organic solvent with water. However, in this method, the amines used may produce malodors in the workplace environment and deteriorate the stability of the water-dispersible polyester resin as the amines volatilize. In addition, Japanese Patent Laid-open Publication No. 2001-73007 discloses a method for preparing an aqueous dispersion having an average particle size of 0.1 to 10 $\mu$m in water by preparing a polyester comprising 0.1 to 1.5 mmol equivalents of a metal salt of sulfonic acid and then adding 10 wt% or less of an anionic surfactant relative to the total weight of the aqueous dispersion. However, the anionic surfactant impairs the long term water resistance and adhesiveness of coating layers, thereby adversely affecting the durability of the coating layers.

To avoid the use of emulsifiers such as anionic surfactants, Japanese Patent No. 3,040,532 discloses a method for preparing a film from an aqueous dispersion of a polyester, the polyester being prepared using at least 80 equivalent mol% of terephthalic acid as an acid component and more than 85 equivalent mol% of hexamethylene glycol as a glycol component. However, the polyester resin causes steric hindrance during the formation of particles in an emulsion; thus, it is difficult to form stable particles having a size of 650 nm or smaller.

As a method for dispersing a polyester resin in water, Korean Patent Laid-open Publication No. 2009-0073561 discloses a method for preparing an aqueous dispersion by copolymerizing a polyester in which a dicarboxylic acid containing a metal salt of sulfonic acid is present in an amount of 5 to 15 molar equivalents based on the total acid component, and then dispersing the polyester in water that contains an aqueous organic solvent. However, since the aqueous dispersion contains a large amount of metal salt of sulfonic acid, if the solid content is increased at the time of coating the aqueous dispersion ultimately obtained, its viscosity rapidly increases, thereby impairing workability. If the solid content is as low as 30 wt% or lower, the physical properties and long term hydrolysis resistance of coating layers are insufficient, with poor water resistance.

JP H08 199115 A discloses a release coating agent of the image recording medium, which is suitable for use in the coating agent of the various types of information recording material, wherein a water-based composite resin dispersion is disclosed.

EP 1 123 947 A1 discloses a polyester aqueous dispersion having excellent properties in water proof, weatherproof, processability and adhesion.

EP 2 184 308 A2 discloses sulfonated aliphatic-aromatic polyester compositions having improved thermal properties and biodegradability.

US 5 380 590 A discloses a water-dispersible aromatic polyester comprising a dicarboxulic acid component and a glycol component, wherein (A) at least 95 mol% of the dicarboxylic acid component is composed of an aromatic dicarboxylic acid component containing 30 to 99.5 mol% of a 2,6-naphthalenedicarboxylic acid component and at least 0.005 mol% to less than 5 mol% of an aromatic dicarboxylic acid component having a sulfonic acid salt group, and (B) at least 95 mol% of the glycol component is composed of an ethylene glycol component and a component from a propylene oxide adduce of bisphenol A, the molar ratio of the ethylene glycol component:the component of a propylene oxide adduct of bisphenol A being 40-99:60-1; and a fast-adhesion polyester film comprising a polyester film and a coating which contains the above water-dispersible aromatic polyester and is formed on at least one surface of the polyester film.

Although researches on the development of water-dispersible polyester resins for use in coatings and adhesives have continued, they still have inferior physical properties to those of polyesters dissolved in conventional organic solvents.

As a result of researches for the purpose of addressing the above described defects, the present inventors have found a process in which a polyester resin having a small amount of a metal salt of sulfonic acid is subjected to emulsification, instead of simply being dispersed in water or a hydrophilic organic solvent, to thereby prepare polyester emulsion particles dispersed in uniform spherical shapes in a water-based system, which produces coating layers, which not only are stable but also have physical properties comparable to those of conventional coating layers.

Further, the present inventors have found a relationship between the particle size of a water-dispersed polyester emulsion and the ratio of aqueous medium to organic solvent, which is expressed as an equation within foreseeable ranges.

## Disclosure of Invention

### Technical Problem

The embodiment of the present invention is reflected in independent claim 1.

The preferred embodiments of the present invention are reflected in dependent claims 2 to 5.

Thus, an object of the present invention is to provide a water-dispersible polyester resin.

Another object of the present invention is to provide a preparation method of water-dispersed emulsion comprising the water-dispersible polyester resin and having excellent adhesiveness suitable for use in coatings and adhesive binders, as well as water resistance of coating layers.

### Solution to Problem

The present disclosure provides a water-dispersible polyester resin comprising, as repeating units, (i) an acid component comprising 1 to 3 mol%, based on the acid component, of an aromatic dicarboxylic acid having a metal salt of sulfonic acid; and (ii) a glycol component comprising a linear glycol, wherein the polyester resin comprises at least 20 wt% of the linear glycol based on the total weight of the resin.

The present disclosure provides a water-dispersed emulsion comprising a water-dispersible polyester resin comprising, as repeating units, (i) an acid component comprising 1 to 3 mol%, based on the acid component, of an aromatic dicarboxylic acid having a metal salt of sulfonic acid; and (ii) a glycol component comprising a linear glycol, wherein the polyester resin comprises at least 20 wt% of the linear glycol based on the total weight of the resin and has an average particle diameter of 100 to 650 nm.

To achieve the object, the present invention provides a method for preparing a water-dispersed emulsion, the method comprising (a) dissolving, in an organic solvent at a temperature below 100°C, a water-dispersible polyester resin comprising, as repeating units, (i) an acid component comprising 1 to 3 mol%, based on the acid component, of an aromatic dicarboxylic acid having a metal salt of sulfonic acid; and (ii) a glycol component comprising a linear glycol, wherein the polyester resin comprises at least 20 wt% of the linear glycol based on the total weight of the resin; (b) adding water at a rate of 2.5 to 5.0 g/min based on 100 g of the dissolution product to the dissolution product obtained in step (a) and then stirring the dissolution product for self-emulsification; and (c) depressurizing the self-emulsion obtained in step (b) and then removing the organic solvent to thereby prepare the water-dispersed emulsion, and wherein the water-dispersed emulsion has a solid content of 40 to 60 wt%.

### Advantageous Effects of Invention

The present invention not only reduces harmfulness to humans by minimizing the use of organic solvents to be employed with a water-dispersible polyester, but also prevents odors by avoiding the use of amines. Moreover, the water-dispersed emulsion has excellent coating and adhesive properties and water dispersibility even without an emulsifier such as a surfactant.

### Best Mode for Carrying out the Invention

Hereinafter, the present invention is described in more detail.

### <Water-dispersible polyester resin>

The present disclosure provides a water-dispersible polyester resin comprising, as repeating units, (i) an acid component comprising 1 to 3 mol%, based on the acid component, of an aromatic dicarboxylic acid having a metal salt of sulfonic acid; and (ii) a glycol component comprising a linear glycol, wherein the polyester resin comprises at least 20 wt% of the linear glycol based on the total weight of the resin.

The water-dispersible polyester resin according to the present invention is prepared by esterification and polycondensation of an acid component comprising 1 to 3 mol%, based on the acid component, of an aromatic dicarboxylic acid having a metal salt of sulfonic acid and a glycol component comprising a linear glycol.

Specifically, the water-dispersible polyester resin is prepared by subjecting the acid component comprising 1 to 3 mol%, based on the acid component, of an aromatic dicarboxylic acid having a metal salt of sulfonic acid and the glycol component comprising a linear glycol to an esterification reaction at 220 to 300°C, specifically 220 to 270°C, optionally under a pressure of 0.1 to 3.0 kgf/cm$^2$, specifically 0.2 to 2.0 kgf/cm$^2$; and subjecting the reaction mixture to a polycondensation reaction at 240 to 300°C, specifically 250 to 280°C, under a reduced pressure of at most 0.1 mmHg, while a glycol byproduct is removed.

The acid component in the present invention comprises an aromatic dicarboxylic acid having a metal salt of sulfonic acid.

The aromatic dicarboxylic acid having a metal salt of sulfonic acid may be present in an amount of 1 to 3 mol% based on the total acid component. The aromatic dicarboxylic acid having a metal salt of sulfonic acid renders a polyester resin water dispersible and self-emulsifiable.

If the content of the metal salt of sulfonic acid is at least 1 mol% based on the total acid component, a water-dispersed emulsion may be prepared with a stable particle size of at most 650 nm and stable water dispersibility. If the content of the metal salt of sulfonic acid is 3 mol% or lower, the hydrolysis resistance of the water-dispersed emulsion thus prepared is not degraded.

The aromatic dicarboxylic acid having a metal salt of sulfonic acid may be selected from the group consisting of 5-sodium sulfodimethyl isophthalic acid, 5-sodium isophthalic acid, and combinations thereof. Preferably, 5-sodium sulfodimethyl isophthalate may be used.

The aromatic dicarboxylic acid having a metal salt of sulfonic acid may be present in an amount, based on the total weight of the water-dispersible polyester resin, of 0.1 to 4 wt%, 0.1 to 3.5 wt%, 0.3 to 3.5 wt%, 0.5 to 4 wt%, 1.5 to 4 wt%, or 2 to 3 wt%.

Further, the acid component in the present invention may comprise an aromatic dicarboxylic acid component selected from the group consisting of terephthalic acid, isophthalic acid, phthalic acid, oxophthalic acid, and combinations thereof. In particular, terephthalic acid, isophthalic acid, or combinations thereof may be employed. The aromatic dicarboxylic acid may be present in an amount, based on the total weight of the resin, of 30 to 65 wt%, 40 to 60 wt%, or 45 to 55 wt%.

The acid component of the present invention may further comprise a linear dicarboxylic acid selected from the group consisting of adipic acid, azelaic acid, sebacic acid, fumaric acid, and combinations thereof. In particular, adipic acid, sebacic acid, or combinations thereof may be employed.

The linear dicarboxylic acid may be present in an amount, based on the total weight of the water-dispersible polyester resin, of 0 to 50 wt% or 0 to 40 wt%.

In the present invention, the glycol component comprises a linear glycol.

The linear glycol may be selected from the group consisting of ethylene glycol, monopropylene glycol, diethylene glycol, dipropylene glycol, neopentyl glycol, 1,6-hexanediol, methylpentyl glycol, and combinations thereof. In particular, the linear glycol may be ethylene glycol, neopentyl glycol, diethylene glycol, 1,6-hexanediol, or combinations thereof.

The linear glycol may be present in an amount, based on the total weight of the water-dispersible polyester resin, of at least 20 wt%, specifically 20 to 60 wt%, or more specifically 25 to 58 wt%.

If the content of the linear glycol is at least 20 wt%, the polyester molecules move freely, thereby improving their fluidity, during self-emulsification, and relatively smaller amounts of aromatic and alicyclic groups better activate the hydrophilic portion that serves as a surfactant, which enables a water-dispersed emulsion to be prepared in a desired particle size of 650 nm or less. Consequently, this improves the long term stability of the water-dispersed emulsion.

The glycol component of the present invention may further comprise an alicyclic glycol. The alicyclic glycol may be selected from the group consisting of 1,4-cyclohexane dimethanol (CHDM), tricyclodecane dimethanol, and combinations thereof.

The alicyclic glycol may be present in an amount, based on the total weight of the water-dispersible polyester resin, of 0 to 40 wt%, 0 to 30 wt%, or 0 to 25 wt%.

The intrinsic viscosity of the water-dispersible polyester resin according to the present invention may be 0.3 to 1.0 dL/g, specifically 0.4 to 0.8 dL/g. If the intrinsic viscosity of the water-dispersible polyester resin is at least 0.3 dL/g, the amount of a resin having a metal salt of sulfonic acid for forming emulsion particles relatively increases, whereas that of a resin having hydrophobicity decreases, which renders smaller the particle size of the water-dispersible polyester.

### <Water-dispersed emulsion>

The present disclosure provides a water-dispersed emulsion comprising a water-dispersible polyester resin comprising, as repeating units, (i) an acid component comprising 1 to 3 mol%, based on the acid component, of an aromatic dicarboxylic acid having a metal salt of sulfonic acid; and (ii) a glycol component comprising a linear glycol, wherein the polyester resin comprises at least 20 wt% of the linear glycol based on the total weight of the resin and has an average particle diameter of 100 to 650 nm.

The average diameter of the water-dispersible polyester resin in the water-dispersed emulsion according to the present disclosure may be at most 650 nm, specifically 100 to 650 nm, and more specifically 100 to 400 nm. The average diameter of particles in the water-dispersed emulsion of at most 650 nm prevents sedimentation and agglomeration of the polyester particles, which is desirable in terms of long term stability.

The solid content of the water-dispersed emulsion according to the present invention may be at least 20 wt%, at least 40 wt%, 20 to 60 wt%, or 40 to 60 wt%. If the amount of the water-dispersible polyester resin in the water-dispersed emulsion is, for example, 20 to 60 wt%, the physical properties of a coating layer formed from the water-dispersed emulsion are excellent; thus, the water-dispersed emulsion may be desirably used as a coating or as an adhesive.

The water-dispersed emulsion according to the present disclosure may have a relative viscosity of 500 to 2,000 cps (centipoise), specifically 900 to 1,600 cps.

The average particle diameter of the polyester resin in the water-dispersed emulsion according to the present disclosure may be predicted from the intrinsic viscosity of the water-dispersible polyester resin, the amount of monomers having a metal salt of sulfonic acid, and the content ratio between water and organic solvent used for preparing the emulsion, etc., and satisfies the relationship in Formula 1 below:

[Formula 1]

$$Y\,(nm) = k \times e^{-aX}$$

wherein

Y is the average particle diameter (nm) of the polyester resin in the water-dispersed emulsion,
X is the content ratio between water and organic solvent, and
a and k each independently represent constants.

Each of a and k independently represents a constant. Constant a tends to increase by a factor of 1/10 as the metal salt of sulfonic acid in the water-dispersible polyester resin increases by 1 mol% based on the total acid component.

Further, constant a follows a curve in which it increases by 10 times as the intrinsic viscosity of the water-dispersible polyester resin containing a certain amount of the metal salt of sulfonic acid decreases by 0.1 dL/g.

X indicates the content ratio between water and organic solvent (*i.e.*, water/organic solvent) and may be 0.45 to 4.0.

A stable particle size may be determined depending on the content ratio between water and organic solvent beyond the point at which self-emulsification occurs. Specifically, as water, which has a relatively high polarity, is added to a continuous phase of an organic solvent and a water-dispersible polyester resin dissolved therein for preparing a water-dispersed emulsion, the apparent viscosity increases such that entanglement around the stirrer rod may be observed. Due to the difference in polarity, the organic solvent and water gradually undergo a phase separation, which may be visually observed as a change in color to milk white. That is, as water is added, the continuous phase changes to the organic solvent and water, and the disperse phase undergoes a phase inversion to the polyester. Such phase inversion occurs when the amount of water added to the organic solvent is 10 to 20 wt%. The stable behavior of the particles may vary with the amount of water added thereafter, and the final particle size may be determined accordingly.

Meanwhile, the water-dispersed emulsion according to the present disclosure may further comprise, as necessary, an additive selected from the group consisting of curing agents, thickeners, antifoaming agents, leveling agents, stabilizers, and combinations thereof.

If the water-dispersed emulsion according to the present disclosure further comprises a curing agent, a cross-linked structure is formed such that the water-dispersed emulsion can form a coating layer having even better properties. Further, if the water-dispersed emulsion comprises both a curing agent and a thickener, it imparts a desirable viscosity to the water-dispersed emulsion, resulting in improved convenience of use and enhanced wettability to substrates.

At least one or two types of curing agents that are reactive with the functional group, for example, a hydroxyl group, of the polyester resin may be used. Specifically, the curing agent may include an isocyanate compound, a melamine resin, a phenol resin, or the like. In particular, isocyanate compounds have excellent reactivity with the water-dispersible polyester resin. Meanwhile, for long term storage of the water-dispersed emulsion, it is desirable to use a curing agent that initiates curing at 120°C or above.

**\<Method for preparation of water-dispersed emulsion\>**

The present invention provides a method for preparing the water-dispersed emulsion described above.

The method may comprise (a) dissolving, in an organic solvent at a temperature below 100°C, a water-dispersible polyester resin comprising, as repeating units, (i) an acid component comprising 1 to 3 mol%, based on the acid component, of an aromatic dicarboxylic acid having a metal salt of sulfonic acid; and (ii) a glycol component comprising a linear glycol, wherein the polyester resin comprises at least 20 wt% of the linear glycol based on the total weight of the resin; (b) adding water to the dissolution product obtained in step (a) and then stirring the dissolution product for self-emulsification; and (c) depressurizing the self-emulsion obtained in step (b) and then removing the organic solvent to thereby prepare the water-dispersed emulsion.

In step (a), a water-dispersible polyester resin is dissolved in an organic solvent at a temperature below 100°C, the polyester resin comprising, as repeating units, (i) an acid component comprising 1 to 3 mol%, based on the acid component, of an aromatic dicarboxylic acid having a metal salt of sulfonic acid; and (ii) a glycol component comprising a linear glycol, wherein the polyester resin comprises at least 20 wt% of the linear glycol based on the total weight of the resin.

The water-dispersible polyester resin may be prepared according to the same method as that described above.

The organic solvent is water soluble and can be fractionated according to boiling point in subsequent step (c). The organic solvent can be selected such that it dissolves at least 20 wt%, specifically 20 to 70 wt%, of the water-dispersible polyester resin having a metal salt of sulfonic acid. A ketone-based organic solvent selected from the group consisting of acetone, methyl ethyl ketone, ethyl isobutyl ketone, and combinations thereof may be used as the organic solvent.

The water-dispersible polyester resin is dissolved in the organic solvent after the organic solvent is heated to a temperature below its boiling point, for example, below 100°C. Here, care must be taken to prevent loss of the organic solvent.

In step (b), water is added to the dissolution product obtained in step (a), followed by agitation thereof, to have the dissolved water-dispersible polyester resin self-emulsified.

Water may be added such that the solid content of the water-dispersed emulsion ultimately prepared is at least 20 wt%, at least 40 wt%, 20 to 60 wt%, or, for example, 40 to 60 wt%. Further, the prepared water-dispersed emulsion is desirable in terms of long term stability if the amount of water added is such that the ratio of water to organic solvent is in a range of 0.45 to 4.0.

It is desirable to slowly add water at a constant rate of 2.5 to 5.0 g/min, specifically 3.0 to 4.0 g/min, based on 100 g of the dissolution product. If water is added at a rate of 5.0 g/min or lower, the particle size of the water-dispersed emulsion would not be large. If the rate is 2.5 g/min or higher, the process time would not be too long to impair the efficiency.

As water is added to the organic solvent dissolution product obtained in step (a), its viscosity may increase such that the agitation efficiency is reduced; thus, the self-emulsification is carried out with agitation at 300 to 700 rpm. Such physical agitation contributes to forming uniformly stable emulsion particle sizes. Agitation at 300 to 700 rpm desirably allows the polyester particles to be sufficiently pulverized.

In the self-emulsification of the preparation method according to the present invention, the water-dispersible polyester resin itself serves as a primary emulsifier and provides sites for the reaction of forming particles. Thus, a separate emulsifier, such as a surfactant, is not necessary in the present invention, which not only prevents degradation of the physical properties of a polyester coating layer, but also improves storage stability.

In step (c), the organic solvent introduced in step (a) is removed. Specifically, the self-emulsion obtained in step (b) is depressurized, and then the organic solvent is removed to thereby prepare a water-dispersed emulsion.

The depressurization may be performed at a rate of 1.0 to 2.0 mmHg/min. Due to the difference in boiling points of water and of the organic solvent, the organic solvent is separated from water while the pressure and temperature are gradually lowered; thus, the organic solvent is entirely removed from the aqueous dispersion.

The depressurization may be performed such that the final pressure is 40 to 60 mmHg.

In the present invention, the water-dispersed emulsion may be prepared with a residual organic solvent content of 0.1 wt% or lower based on the total weight of the water-dispersed emulsion. If the residual organic solvent content is 0.1 wt% or lower based on the total weight of the water-dispersed emulsion, malodors are not released when the water-dispersed emulsion is used, and the stability of the water-dispersible polyester particles may be improved.

Therefore, the present invention not only reduces harmfulness to humans by minimizing the use of organic solvents to be employed with the water-dispersible polyester resin, but also prevents odors during its use by avoiding the use of amines. Moreover, the water-dispersed emulsion has excellent coating and adhesive properties and water dispersibility even without an emulsifier such as a surfactant. Therefore, the water-dispersed emulsion may be desirably used in the preparation of coatings, adhesives, and the like.

**Mode for the Invention**

[Examples]

Hereinafter, the present invention is explained in detail by Examples. The following Examples are intended to further illustrate the present invention without limiting its scope.

**Preparation of water-dispersible polyester resin and water-dispersed emulsion**

**Example 1**

Preparation of water-dispersible polyester resin (A)

170 g of terephthalic acid (TPA), 18 g of 5-sodium sulfodimethyl isophthalate (DMS), 159 g of isophthalic acid (IPA), 114 g of ethylene glycol (EG), and 191 g of neopentyl glycol (NPG) were charged to a reactor equipped with a temperature-controllable column and a condenser, and then an esterification reaction was carried out at atmospheric pressure while the mixture was stirred and the internal temperature of the reactor was gradually raised to 240°C.
When water, as a byproduct, started to be released during the reaction, the temperature of the column was maintained at 100°C to prevent the alcoholic components from being sublimed or evaporated. When byproducts were released no longer and the reactants changed to a transparent oligomer from a white and opaque state, the esterification reaction was terminated and a polycondensation reaction was initiated. The polycondensation reaction was carried out by slowly applying a vacuum and increasing the temperature to maintain the pressure inside the reactor at 0.1 mmHg and the temperature of the reactants at 260°C, to thereby from a water-dispersible polyester resin. The intrinsic viscosity of the water-dispersible polyester resin thus obtained was 0.55 dL/g.

Preparation of water-dispersed emulsion (a)

A condenser for condensation was connected to a temperature-controllable reactor. 50 wt% of the water-dispersible polyester resin (A) prepared above and acetone were charged to the reactor and slowly stirred to dissolve the polyester resin in acetone. The dissolution temperature was maintained at 40°C, which is lower than the boiling point of acetone, in order to prevent loss of acetone.
Upon completion of dissolution of the polyester resin, ionized water was charged to a dropping panel at a ratio of ionized water to acetone being 1.0, and water was fed to the reactor at a rate of about 3.5 g/min by gradually opening the valve. Here, the reactants were maintained at a temperature of 35 to 40°C and rapidly agitated at 400 rpm.
Upon completion of addition of water, a vacuum pump was connected to the reactor to apply a vacuum. The pressure was rapidly lowered from atmospheric pressure to 400 mmHg and then gradually lowered from 400 mmHg to 60 mmHg. Depressurization was performed at an average rate of 2.0 mmHg/min. A water-dispersed emulsion was obtained through the depressurization by which the organic solvent was removed. The average diameter of particles in the water-dispersed emulsion thus obtained was 130 nm, and the amount of residual organic solvent was 0.05 wt% based on the total weight of the water-dispersed emulsion.

**Example 2**

Preparation of water-dispersible polyester resin (B)

The same procedures of the method for preparing the water-dispersible polyester resin (A) in Example 1 were repeated with the same raw materials to prepare a water-dispersible polyester resin (B), except that the intrinsic viscosity of the water-dispersible polyester resin (B) thus obtained was adjusted to 0.45 dL/g

Preparation of water-dispersed emulsion (b)

The same procedures of the method for preparing the water-dispersed emulsion in Example 1 were repeated, except that the water-dispersible polyester resin (B) was used instead of the water-dispersible polyester resin (A). The average diameter of particles in the water-dispersed emulsion thus obtained was 200 nm, and the amount of residual organic solvent was below a detectable range.

**Example 3**

Preparation of water-dispersible polyester resin (C)

The same procedures of the method for preparing the water-dispersible polyester resin (A) in Example 1 were repeated, except that 170 g of terephthalic acid, 12 g of 5-sodium sulfodimethyl isophthalate, 163 g of isophthalic acid, 114 g of ethylene glycol, and 191 g of neopentyl glycol were used as raw materials, to prepare a water-dispersible polyester resin (C). The intrinsic viscosity of the water-dispersible polyester resin (C) thus obtained was 0.55 dL/g.

Preparation of water-dispersed emulsion (c)

The same procedures of the method for preparing the water-dispersed emulsion in Example 1 were repeated, except that the water-dispersible polyester resin (C) was used instead of the water-dispersible polyester resin (A). The average diameter of particles in the water-dispersed emulsion thus obtained was 250 nm, and the amount of residual organic solvent was below a detectable range.

**Example 4**

Preparation of water-dispersible polyester resin (D)

The same procedures of the method for preparing the water-dispersible polyester resin (A) in Example 1 were repeated, except that 119 g of terephthalic acid, 14 g of 5-sodium sulfodimethyl isophthalate, 111 g of isophthalic acid, 139 g of adipic acid (AA), 133 g of ethylene glycol, and 185 g of neopentyl glycol were used as raw materials, to prepare a water-dispersible polyester resin (D). The intrinsic viscosity of the water-dispersible polyester resin (D) thus obtained was 0.48 dL/g.

Preparation of water-dispersed emulsion (d)

The same procedures of the method for preparing the water-dispersed emulsion in Example 1 were repeated, except that the water-dispersible polyester resin (D) was used instead of the water-dispersible polyester resin (A). The average diameter of particles in the water-dispersed emulsion thus obtained was 310 nm, and the amount of residual organic solvent was 0.06 wt% based on the total weight of the water-dispersed emulsion.

**Example 5**

Preparation of water-dispersible polyester resin (E)

The same procedures of the method for preparing the water-dispersible polyester resin (A) in Example 1 were repeated, except that 179 g of terephthalic acid, 16 g of 5-sodium sulfodimethyl isophthalate, 170 g of isophthalic acid, 179 g of sebacic acid, 112 g of ethylene glycol, 172 g of neopentyl glycol, and 52 g of diethylene glycol (DEG) were used as raw materials, to prepare a water-dispersible polyester resin (E). The intrinsic viscosity of the water-dispersible polyester resin (E) thus obtained was 0.62 dL/g.

Preparation of water-dispersed emulsion (e)

The same procedures of the method for preparing the water-dispersed emulsion in Example 1 were repeated, except that the water-dispersible polyester resin (E) was used instead of the water-dispersible polyester resin (A). The average diameter of particles in the water-dispersed emulsion thus obtained was 287 nm, and the amount of residual organic solvent was 0.08 wt% based on the total weight of the water-dispersed emulsion.

**Example 6**

Preparation of water-dispersible polyester resin (F)

The same procedures of the method for preparing the water-dispersible polyester resin (A) in Example 1 were repeated, except that 179 g of terephthalic acid, 16 g of 5-sodium sulfodimethyl isophthalate, 170 g of isophthalic acid, 41 g of ethylene glycol, 6 g of diethylene glycol, 69 g of 1,4-cyclohexane dimethanol (CHDM), and 192 g of neopentyl glycol were used as raw materials, to prepare a water-dispersible polyester resin (F). The intrinsic viscosity of the water-dispersible polyester resin (F) thus obtained was 0.45 dL/g.

Preparation of water-dispersed emulsion (f)

The same procedures of the method for preparing the water-dispersed emulsion in Example 1 were repeated, except that the water-dispersible polyester resin (F) was used instead of the water-dispersible polyester resin (A). The average diameter of particles in the water-dispersed emulsion thus obtained was 346 nm, and the amount of residual organic solvent was below a detectable range.

**Example 7**

Preparation of water-dispersible polyester resin (G)

The same procedures of the method for preparing the water-dispersible polyester resin (A) in Example 1 were repeated, except that 174 g of terephthalic acid, 12 g of 5-sodium sulfodimethyl isophthalate, 167 g of isophthalic acid, 70 g of ethylene glycol, 6 g of diethylene glycol, 179 g of 1,6-hexanediol (1,6-HD), and 98 g of neopentyl glycol were used as raw materials, to prepare a water-dispersible polyester resin (G). The intrinsic viscosity of the water-dispersible polyester resin (G) thus obtained was 0.64 dL/g.

Preparation of water-dispersed emulsion (g)

The same procedures of the method for preparing the water-dispersed emulsion in Example 1 were repeated, except that the water-dispersible polyester resin (G) was used instead of the water-dispersible polyester resin (A). The average diameter of particles in the water-dispersed emulsion thus obtained was 533 nm, and the amount of residual organic solvent was below a detectable range.

**Comparative Example 1**

Preparation of water-dispersible polyester resin (H)

The same procedures of the method for preparing the water-dispersible polyester resin (A) in Example 1 were repeated, except that 161 g of terephthalic acid, 11 g of 5-sodium sulfodimethyl isophthalate, 154 g of isophthalic acid, 34 g of ethylene glycol, 85 g of neopentyl glycol, and 195 g of 1,4-cyclohexane dimethanol were used as raw materials, to prepare a water-dispersible polyester resin (H). The intrinsic viscosity of the water-dispersible polyester resin (H) thus obtained was 0.50 dL/g.

Preparation of water-dispersed emulsion (h)

The same procedures of the method for preparing the water-dispersed emulsion in Example 1 were repeated, except that the water-dispersible polyester resin (H) was used instead of the water-dispersible polyester resin (A). The average diameter of particles in the water-dispersed emulsion thus obtained was 3,500 nm, and the amount of residual organic solvent was 0.05 wt% based on the total weight of the water-dispersed emulsion.

**Comparative Example 2**

Preparation of water-dispersible polyester resin (I)

The same procedures of the method for preparing the water-dispersible polyester resin in Example 3 were repeated to prepare a water-dispersible polyester resin (I), except that the intrinsic viscosity of the resin was adjusted to 0.2 dL/g. Thus, the intrinsic viscosity of the water-dispersible polyester resin thus obtained was 0.20 dL/g.

Preparation of water-dispersed emulsion (i)

The same procedures of the method for preparing the water-dispersed emulsion in Example 1 were repeated, except that the water-dispersible polyester resin (I) was used instead of the water-dispersible polyester resin (A). The average diameter of particles in the water-dispersed emulsion thus obtained was 2,500 nm, and the amount of residual organic solvent was 0.05 wt% based on the total weight of the water-dispersed emulsion.

**Comparative Example 3**

Preparation of water-dispersible polyester resin (J)

The same procedures of the method for preparing the water-dispersible polyester resin (A) in Example 1 were repeated, except that 183 g of terephthalic acid, 54 g of 5-sodium sulfodimethyl isophthalate, 63 g of isophthalic acid, 157 g of ethylene glycol, and 20 g of diethylene glycol were used as raw materials, to prepare a water-dispersible polyester resin (J). The intrinsic viscosity of the water-dispersible polyester resin (J) thus obtained was 0.47 dL/g.

Preparation of water-dispersed solution (j)

100 g of the water-dispersible polyester resin (J) and 100 g of ionized water were charged to a three-neck flask and stirred at 200 rpm while being heated to a dissolution temperature of 80°C to prepare a water-dispersed solution (j). The average diameter of particles in the water-dispersed solution thus obtained was 15 nm, and the amount of residual organic solvent was below a detectable range.

**Comparative Example 4**

Preparation of water-insoluble polyester resin (K)

The same procedures of the method for preparing the water-dispersible polyester resin (A) in Example 1 were repeated, except that 180 g of terephthalic acid, 180 g of isophthalic acid, 120 g of ethylene glycol, and 158 g of neopentyl glycol were used as raw materials, to prepare a water-insoluble polyester resin (K). The intrinsic viscosity of the water-insoluble polyester resin (K) thus obtained was 0.53 dL/g.

Preparation of solution (k) for comparison of coating layers

30 g of the polyester resin (K) and 70 g of methyl ethyl ketone were charged to a conical flask and dissolved for 3 hours at 60°C to prepare a solution (k).

**Comparative Example 5**

Preparation of water-dispersed emulsion (1)

The same procedures of the method for preparing the water-dispersed emulsion in Example 1 were repeated, except that the ratio of ionized water to acetone was changed to 0.4, to prepare a water-dispersed emulsion (1). The average diameter of particles in the water-dispersed emulsion thus obtained was 930 nm.
The compositions (wt%) of the water-dispersible polyester resins prepared in Examples 1 to 7 and in Comparative Examples 1 to 4 are shown in Tables 1 and 2, respectively.

[Table 1]

| Composition (wt%) | Example 1 | Example 2 | Example 3 | Example 4 | Example 5 | Example 6 | Example 7 |
|---|---|---|---|---|---|---|---|
| | A | B | C | D | E | F | G |
| TPA | 26 | 26 | 26 | 17 | 21 | 32 | 31 |
| IPA | 24.2 | 24.2 | 25.2 | 16 | 16 | 28 | 27 |
| DMS | 2.8 | 2.8 | 1.8 | 2 | 3 | 4 | 3 |
| AA | - | - | - | 20 | - | - | - |
| SA | - | - | - | - | 33 | - | - |
| EG | 18 | 18 | 18 | 19 | 2 | 3 | 2 |
| NPG | 29 | 29 | 29 | 26 | 19 | 22 | 34 |
| DEG | - | - | - | - | 6 | 1 | 1 |
| CHDM | - | - | - | - | - | 10 | - |

(continued)

| Composition (wt%) | Example 1 | Example 2 | Example 3 | Example 4 | Example 5 | Example 6 | Example 7 |
|---|---|---|---|---|---|---|---|
| | A | B | C | D | E | F | G |
| 1,6-HD | - | - | - | - | - | - | 2 |

[Table 2]

| Composition (wt%) | Comparative Example 1 | Comparative Example 2 | Comparative Example 3 | Comparative Example 4 |
|---|---|---|---|---|
| | H | I | J | K |
| TPA | 25 | 26 | 40 | 30 |
| IPA | 25 | 25.2 | 12 | 30 |
| DMS | 2 | 1.8 | 15 | - |
| EG | 5 | 18 | 29 | 17 |
| NPG | 13 | 29 | - | 23 |
| CHDM | 30 | - | - | - |
| DEG | - | - | 4 | - |

**Experimental Example 1: evaluation of physical properties**

The physical properties of the water-dispersible polyester resins and of the water-dispersed emulsions prepared in the Examples and Comparative Examples were analyzed using the methods described below. The results thereof are shown in Tables 3 and 4.

Intrinsic viscosity

Intrinsic viscosity was measured using an IV automatic measurement device (SKYIS 5000) in accordance with ASTM D 4603-86 by dissolving 0.36 g of a water-dispersible polyester resin in 30 mL of O-chlorophenol at 35°C.

Average particle diameter

A water-dispersible polyester resin was diluted to 0.1 wt% in ion exchanged water and placed in a dynamic light scattering (DLS) average particle size analyzer to measure its average particle diameter (Y).

Solid content

In accordance with ASTM D 1259-85, 10 g of a water-dispersed emulsion were sampled and then dried for 3 hours in a vacuum oven at 100°C and -750 mmHg, after which the sample was weighed to calculate its solid content.

Relative viscosity

300 g of a water-dispersed emulsion were charged to a glass container, and its relative viscosity was measured with a Brookfield viscometer using a spindle number 3.

Storage stability

A water-dispersed emulsion was stored for 6 months at room temperature (23°C to 25°C) to observe changes in particle size. If the difference in particle size from the initial particle size was 5% or less, the storage stability was judged to be stable and marked as "O." If the difference in particle size from the initial particle size was greater than 5%, the storage stability was judged to be unstable and marked as "X."

Content of residual organic solvent

About 1 g of a water-dispersed emulsion was sampled in portions, and the amount of residual organic solvent was analyzed with a Headspace-GC (Perkin-Elmer Clarus 600) by calculating areas in a GC-chromatogram. Here, the detectable range in this analysis was 0.05 to 0.2 wt%, and values below 0.05 wt% were indicated as "-."

[Table 3]

| | Example 1 | Example 2 | Example 3 | Example 4 | Example 5 | Example 6 | Example 7 |
|---|---|---|---|---|---|---|---|
| | a | b | c | d | e | f | g |
| Resin type | A | B | C | D | E | F | G |
| Intrinsic viscosity of resin (dL/g) | 0.55 | 0.45 | 0.55 | 0.48 | 0.62 | 0.45 | 0.64 |
| Particle size in emulsion (nm) | 130 | 200 | 250 | 310 | 287 | 346 | 533 |
| Solid content of emulsion | 48 wt% | 49 wt% | 49 wt% | 47 wt% | 45 wt% | 51 wt% | 50 wt% |
| Relative viscosity of emulsion (cps) | 1,300 | 950 | 1,350 | 1,000 | 900 | 1,600 | 1,500 |
| 6 month storage stability of emulsion | O | O | O | O | O | O | O |
| Ionized water /acetone ratio | 1.0 | 1.0 | 1.0 | 1.0 | 1.0 | 1.0 | 1.0 |
| Residual organic solvent content (wt%) | 0.05 | - | - | 0.06 | 0.08 | - | - |

[Table 4]

| | Comparative Example 1 | Comparative Example 2 | Comparative Example 3 | Comparative Example 5 |
|---|---|---|---|---|
| | h | i | j | 1 |
| Resin type | H | I | J | A |
| Intrinsic viscosity of resin (dL/g) | 0.50 | 0.20 | 0.47 | 0.55 |
| Particle size in emulsion (nm) | 3500 nm | 2500 nm | 15 nm | 930 nm |
| Solid content of emulsion | 48 wt% | 47 wt% | 50 wt% | 65 wt% |
| Relative viscosity of emulsion (cps) | Could not be measured | Could not be measured | 35,000 | 5,300 |
| 6 month storage stability of emulsion | Layer separation | Layer separation | O | X |
| Ionized water /acetone ratio | 1.0 | 1.0 | 1.0 | 0.4 |
| Residual organic solvent content (wt%) | 0.05 | 0.05 | - | - |

As shown in Tables 3 and 4, although the solid contents in the water-dispersed emulsions according to Examples 1 to 7 are over 40 wt%, their viscosities are 2,000 cps or lower. The water-dispersed emulsions according to Examples 1 to 7 also showed almost no changes in particle size over 6 months, indicating excellent long term stability. Further, when a coating layer was formed from a water-dispersed emulsion according to the present invention, it had excellent water resistance, acid resistance, and alkali resistance.

On the other hand, the water-dispersed emulsion (h) of Comparative Example 1 had a low aliphatic content of less than 20 wt%. The water-dispersed emulsion (i) of Comparative Example 2 had a large size of particles due to the low viscosity (0.2 dL/g) of the resin, indicating insufficient long term storability.

Further, the water-dispersed emulsion (j) of Comparative Example 3 had a metal salt of sulfonic acid (that is, DMS) about 4 times more than those of the Examples; consequently, it had a very high relative viscosity. The water-dispersed emulsion of Comparative Example 3 having a large amount of a metal salt of sulfonic acid monomer showed a poor external appearance in the water resistance test.

In addition, although the water-dispersed emulsion (1) of Comparative Example 5 was prepared from the same resin as Example 1, it had a large size of particles since the ratio of ionized water to acetone was below 0.45, thereby showing insufficient long term storability. Its relative viscosity exceeded 2,000 cps as well.

**Experimental Example 2: physical properties of coating formed from water-dispersed emulsion**

Specimens were prepared as below in order to evaluate the physical properties of coatings formed from water-dispersed emulsions in accordance with the amount of a metal salt of sulfonic acid.

Each of the water-dispersed emulsions prepared in Examples 2 and 3 and in Comparative Examples 3 and 4 was stirred while 10 wt% of a curing agent (BL XP2706, Bayer) was added thereto. In order to increase flowability and prevent bubbles in a coating material, 0.3 wt% of a leveling agent (BYK 381, BYK) and 0.1 wt% of an antifoaming agent (BYK 019, BYK) were added thereto, and the coating material was coated in a thickness of about 20 $\mu$m on an electrolytic galvanized (EGI) steel sheet and then dried in a convection oven for 10 minutes at 160°C to thereby produce a specimen to be tested for evaluating the physical properties of coatings formed from the water-dispersed emulsions. The water-dispersed emulsion coating specimens thus produced were tested for evaluating the physical properties of coatings as described below.

Water resistance

After each of the water-dispersed emulsion coating specimens was immersed in water for 24 hours, changes to its external appearance were observed. If no change was observed, it was marked as "O." If whitening of the coating was observed, it was marked as "X."

Chemical resistance (acid resistance/alkali resistance)

Aqueous solutions of nitric acid ($HNO_3$) and of sodium hydroxide (NaOH) diluted in distilled water in a concentration of 2 vol% were respectively prepared. While each of the solutions was dropped onto each water-dispersed emulsion coating specimen produced above, any changes to the external appearance of the coating specimen was observed with the naked eye, and the times for such changes were recorded.

The water resistance and chemical resistance are shown in Table 5.

[Table 5]

|  | b | c | j | k |
|---|---|---|---|---|
| Water resistance | ○ | ○ | X | ○ |
| Acid resistance | 18 hr | 18 hr | 2 hr | 18 hr |
| Alkali resistance | 13 hr | 13 hr | 1hr | 13 hr |

As shown in Table 5, the coating layers formed from the water-dispersed emulsions (b) and (c) according to Examples 2 and 3 of the present invention had excellent water resistance and excellent chemical resistance, showing resistance to acid and alkali for 18 hours and 13 hours, respectively. The coating layers formed from the water-dispersed emulsions according to Examples 2 and 3 had similar physical properties to those of the layer formed from the solution (k) according to Comparative Example 4, which had been prepared by dissolving a polyester resin in an organic solvent, instead of dispersing it in water.

On the other hand, the coating layer formed from the water-dispersed emulsion (j) according to Comparative Example 3, in which the content of DMS was excessively high, showed whitening of the layer when immersed in water, indicating poor water resistance. It also had poor chemical resistance with the recorded times for acid resistance and alkali resistance being 2 hours and 1 hour, respectively.

**Experimental Example 3: relationship between water-dispersed emulsion particle size and ratio of water to organic solvent**

As shown in Table 3 of Experimental Example 1, the water-dispersed emulsion (a) of Example 1 had a particle size different from that of the water-dispersed emulsion (1) of Comparative Example 5 due to the difference in the ratios of ionized water to organic solvent added during the preparation process.

Based on the result, the following relationship between the average particle size of a water-dispersed emulsion (Y) and the ratio of aqueous medium (ionized water) to organic solvent was derived.

[Formula 1]

$$Y\,(nm) = k \times e^{-aX}$$

wherein

Y is the average particle diameter of a water-dispersed emulsion,
X is the content ratio of water to organic solvent, and
a and k each independently represent constants.

That is, the average particle diameter of a water-dispersed emulsion (Y) was expressed as an exponential function, which decreases as the ratio of ionized water to acetone (X) increases. Further, as shown in Table 6, constant a increased by a factor of 1/10 as the metal salt of sulfonic acid increased by 1 mol% based on the total acid component. Constant a also increased by 10 times as the intrinsic viscosity of the water-dispersible polyester containing a metal salt of sulfonic acid decreased by 0.1 dL/g.

[Table 6]

|  | a | b | c |
|---|---|---|---|
| DMS content (mol%) | 3 | 3 | 2 |
| Intrinsic velocity of resin (dL/g) | 0.55 | 0.45 | 0.55 |
| Y (nm) | $K^*e^{-0.034X}$ | $K^*e^{-0.36X}$ | $K^*e^{-0.33X}$ |

## Claims

1.   A method for preparing a water-dispersed emulsion comprising:

(a) dissolving, in an organic solvent at a temperature below 100°C, a water-dispersible polyester resin comprising, as repeating units, (i) an acid component comprising 1 to 3 mol%, based on the acid component, of an aromatic dicarboxylic acid having a metal salt of sulfonic acid, and (ii) a glycol component comprising a linear glycol, wherein the polyester resin comprises at least 20 wt% of the linear glycol based on the total weight of the resin;
(b) adding water at a rate of 2.5 to 5.0 g/min based on 100 g of the dissolution product to the dissolution product obtained in step (a) and then stirring the dissolution product for self-emulsification; and
(c) depressurizing the self-emulsion obtained in step (b) and then removing the organic solvent to thereby prepare the water-dispersed emulsion, and wherein the water-dispersed emulsion has a solid content of 40 to 60 wt%.

2.   The method of claim 1, wherein, in step (a), the organic solvent is a ketone-based organic solvent selected from the group consisting of acetone, methyl ethyl ketone, ethyl isobutyl ketone, and combinations thereof.

3.   The method of claim 1, wherein, in step (b), water is added such that the solid content of the water-dispersed emulsion is 20 to 60 wt%.

4. The method of claim 1, wherein, in step (b), the stirring is performed at a speed of 300 to 700 rpm.

5. The method of claim 1, wherein, in step (c), the water-dispersed emulsion comprises at most 0.1 wt% of a residual organic solvent based on the total weight of the water-dispersed emulsion.

**Patentansprüche**

1. Verfahren zur Herstellung einer wasserdispergierten Emulsion, umfassend:

(a) Auflösen eines wasserdispergierbaren Polyesterharzes, das als Repetiereinheiten (i) eine Säurekomponente, die 1 bis 3 Mol-%, bezogen auf die Säurekomponente, einer aromatischen Dicarbonsäure mit einem Metallsalz von Sulfonsäure umfasst, und (ii) eine Glycolkomponente, die ein lineares Glycol umfasst, umfasst, in einem organischen Lösungsmittel bei einer Temperatur unterhalb 100 °C, wobei das Polyesterharz wenigstens 20 Gew.-% des linearen Glycols umfasst, bezogen auf das Gesamtgewicht des Harzes;
(b) Hinzufügen von Wasser mit einer Geschwindigkeit von 2,5 bis 5,0 g/min, bezogen auf 100 g des Auflösungsprodukts, zu dem in Schritt (a) erhaltenen Auflösungsprodukt und dann Rühren des Auflösungsprodukts zur Selbstemulgierung; und
(c) Entspannen der in Schritt (b) erhaltenen Selbstemulsion und dann Entfernen des organischen Lösungsmittels, um dadurch die wasserdispergierte Emulsion herzustellen, wobei die wasserdispergierte Emulsion einen Feststoffgehalt von 40 bis 60 Gew.-% aufweist.

2. Verfahren gemäß Anspruch 1, wobei in Schritt (a) das organische Lösungsmittel ein organisches Lösungsmittel auf Ketonbasis ist, das aus der Gruppe ausgewählt ist, die aus Aceton, Methylethylketon, Ethylisobutylketon und Kombinationen davon besteht.

3. Verfahren gemäß Anspruch 1, wobei in Schritt (b) soviel Wasser hinzugefügt wird, dass der Feststoffgehalt der wasserdispergierten Emulsion 20 bis 60 Gew.-% beträgt.

4. Verfahren gemäß Anspruch 1, wobei in Schritt (b) das Rühren mit einer Geschwindigkeit von 300 bis 700 U/min durchgeführt wird.

5. Verfahren gemäß Anspruch 1, wobei in Schritt (c) die wasserdispergierte Emulsion höchstens 0,1 Gew.-% eines restlichen organischen Lösungsmittels umfasst, bezogen auf das Gesamtgewicht der wasserdispergierten Emulsion.

**Revendications**

1. Procédé pour préparer une émulsion dispersée dans de l'eau, comprenant les étapes consistant à :

(a) dissoudre, dans un solvant organique à une température inférieure à 100 °C, une résine polyester dispersible dans l'eau comprenant comme motifs répétitifs (i) un composant d'acide comprenant 1 à 3 % molaire, par rapport au composant d'acide, un acide dicarboxylique aromatique ayant un sel métallique de l'acide sulfonique, et (ii) un composant de glycol comprenant un glycol linéaire, dans lequel la résine polyester comprend au moins 20 % en poids du glycol linéaire, par rapport au poids total de la résine,
(b) ajouter de l'eau à un débit de 2,5 à 5,0 g/min, par rapport à 100 g du produit de dissolution, au produit de dissolution obtenu dans l'étape (a) et ensuite agiter le produit de dissolution pour auto-émulsification, et
(c) détendre l'auto-émulsion obtenu dans l'étape (b) et ensuite éliminer le solvant organique pour ainsi préparer l'émulsion dispersée dans l'eau, et dans lequel ladite émulsion dispersée dans l'eau présente une teneur en matière solide de 40 à 60 % en poids.

2. Procédé selon la revendication 1, dans lequel, dans l'étape (a), le solvant organique est un solvant organique à base de cétone choisi dans le groupe consistant en acétone, méthyléthylcétone, éthylisobutylcétone, et des combinaisons de celles-ci.

3. Procédé selon la revendication 1, dans lequel, dans l'étape (b), de l'eau est ajoutée en une telle quantité que la teneur en matière solide de ladite émulsion dispersée dans l'eau est 20 à 60 % en poids.

4. Procédé selon la revendication 1, dans lequel, dans l'étape (b), ladite étape consistant à agiter est effectuée à une vitesse de 300 à 700 t/min.

5. Procédé selon la revendication 1, dans lequel, dans l'étape (c), ladite émulsion dispersée dans l'eau comprend au plus 0,1 % en poids d'un solvant organique résiduel, par rapport au poids total de ladite émulsion dispersée dans l'eau.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007177026 A
- JP 2001073007 A
- JP 3040532 B
- KR 20090073561
- JP H08199115A B
- EP 1123947 A1
- EP 2184308 A2
- US 5380590 A